# EUROPEAN PATENT SPECIFICATION

(11) **EP 1 278 428 B1**
(45) Date of publication and mention of the grant of the patent: **16.04.2008**
(21) Application number: 01934960.4
(22) Date of filing: 01.05.2001
(51) Int. Cl.: A23G 1/00, A23G 1/04, A23G 1/02

(54) **METHOD FOR MAKING DUTCHED COCOA**
VERFAHREN ZUR HERSTELLUNG VON ALKALISIERTEM KAKAO
PROCEDE DE FABRICATION DE CACAO ALCALINISE

(30) Priority: 01.05.2000 US 200755 P
(43) Date of publication of application: 29.01.2003
(73) Proprietor: Cocotech, Inc., Swedesboro, NJ 08085-1741 (US)
(72) Inventor: TROUT, Richard, B., Media, PA 19063 (US)
(74) Representative: Wess, Wolfgang
(86) International application number: PCT/US2001/013953
(87) International publication number: WO 2001/082714

(56) References cited:
- WO-A1-98/34496
- US-A- 2 380 158
- US-A- 3 997 680
- US-A- 4 435 436
- US-A- 5 753 296
- US-A- 6 066 350
- MINIFIE B.W.: 'Chocolate, cocoa and confectionery: Science and technology', AVI PUBLISHING CO., WESTPORT, CT XP002943943 2nd edition, pages 37-54, 67-77
- JOHNSON A.H.: 'Encyclopedia of food technology', 1974, THE AVI PUBLISHING CO., INC. XP002943944 * page 201 *

## Description

### FIELD OF THE INVENTION

The present invention pertains to the production of dutched cocoa.

### BACKGROUND OF THE INVENTION

In the manufacture of cocoa, it is often desirable to form "dutched cocoa" for many food applications. Dutched cocoa has unique flavor characteristics and a darker, or even blackened, appearance as opposed to cocoa which has not been dutched. Dutching (also known as "alkalizing") is accomplished in a well known manner by contacting cocoa mass with an alkalizing agent, typically in the form of an aqueous solution. Such alkalizing agents include potassium hydroxide, potassium carbonate, sodium hydroxide, sodium carbonate, sodium bicarbonate, ammonium bicarbonate, ammonium hydroxide, or mixtures thereof, for example. The FDA has strict rules governing both the approved alkalizing agents and the maximum levels of usage of the alkalizing agents or combinations thereof.

More specifically, dutching is typically done to cocoa bean kernels, or nibs, as well as to cocoa powder, or pieces of presscake, which are first reduced in particle size to less than 6.35 mm (¼ inch), and more commonly to less than 3.18 mm (1/8 inch) diameter. The cocoa is then mixed with an aqueous solution of one or more of the approved alkalizing agents in a known manner. This mixture is then usually heated in a vessel while mixing. For reddish colored cocoas, air is usually introduced into the mixer during this reaction phase. For the production of black cocoas, the introduction of air is minimized. The cooking can be done under atmospheric conditions or under pressure followed by atmospheric or even vacuum conditions to facilitate drying (i.e., removal of moisture). Once the alkalizing treatment is complete with respect to dutched nibs, they are milled into a flowable mass and reduced in fat content through the use of hydraulically operated presses, to produce dutched cocoa presscake. The dutched cocoa is usually milled to a fine particle size (typically to a specification of 99% through a 200 mesh screen). For example, in U.S. Pat No. 3,997,680, a process for dutching pulverized cocoa presscake is described.

One adverse effect caused by the dutching of cocoa is the formation of soap due to the interaction of the alkalizing agent and the fat (and/or free fatty acids) present in the cocoa mass. Soap formation occurs to an even greater extent as a result of extreme alkalizing conditions, which are required for the formation of very dark, or black dutched, cocoa. In sum, although the primary issues in evaluating the quality of dutched cocoa are flavor and color, one quantitative measurement is the amount of soap in the processed cocoa.

The flow characteristics of cocoa mass or processed cocoa are another important consideration in processing cocoa. In particular, it is desirable to avoid developing a form of cocoa which tends to stick easily to processing equipment. This can cause delays in processing, difficulty in grinding to desired fineness, and possibly damage to plant equipment. Often, cocoa which has been dutched tends to be more likely to exhibit these types of adverse flow characteristics.

### SUMMARY OF THE INVENTION

The present invention provides a method for making dutched cocoa comprising the steps of first removing fat from a cocoa mass to form a reduced fat cocoa mass and then alkalizing the reduced fat cocoa to form dutched cocoa. The step of removing fat is carried out to an extent such that the reduced fat cocoa mass has a fat content of less than 4% by weight. This order of processing tends to minimize soap formation, improve taste, and result in processed cocoa having improved handling characteristics than cocoa which is dutched first. The invention produces the most effective and valuable results when applied to more extreme alkalizing conditions, such as those used for the manufacture of very dark or black dutched cocoa powders.

An objective is to produce a higher quality dutched cocoa powder than can be manufactured by conventional methods, when starting with normal fat content cocoa presscakes or powders (typically 10-12 % cocoa butter content). In sum, the steps of the process of an embodiment of the invention include first reducing the fat content of the cocoa from that which is usually available from conventional hydraulic pressing of cocoa powder or presscake (10-12% fat), alkalizing the lowfat cocoa, and, optionally, the reintroduction of cocoa butter and/or other fats to "reconstitute" the cocoa. The critical operation is the removal of a considerable portion of the cocoa butter prior to subjecting it to the dutching process.

It is to be understood that both the foregoing general description and the following detailed description are exemplary, but are not restrictive, of the invention.

### DETAILED DESCRIPTION OF THE INVENTION

The present invention is directed to a method for making dutched cocoa. The invention includes removing fat from a cocoa mass to form a reduced fat cocoa mass then alkalizing the reduced fat cocoa to form dutched cocoa. As used herein, the term "cocoa mass" refers to a mixture of cocoa fat and cocoa solids which has not yet been dutched. For example, cocoa mass includes cocoa liquor, which results from grinding cocoa nibs and typically has between 50-58% fat content. Cocoa mass also includes cocoa presscake, which is the cake formed from a hydraulic or screw press used to remove some fat from cocoa liquor, or cocoa powder, which is milled or comminuted cocoa presscake. Cocoa presscake and cocoa powder often have a fat content of between 10 to 12%. Cocoa mass may include any mixture of cocoa fat and solids, including one which has not yet had any fat removed, one which has undergone partial pressing (such as between 20-50%) or one which has undergone full hydraulic or screw pressing such as one with a fat content of as low as about 8%. In sum, the term cocoa mass contemplates a non-dutched mixture having a fat content as high as that found in cocoa liquor to a fat content low but still having a noticeable impact that, if dutched, would have an observable (by taste) soap content.

Thus, the step of removing fat from a cocoa mass contemplates any combination of known fat removal processes, such as by using a hydraulic press, a screw press, or an extraction process, or combinations thereof. For example, when the cocoa mass is cocoa powder or cocoa presscake, the step of removing fat may include extracting the fat by contacting the cocoa mass with a liquefied solvent, and the method also involves separating the solvent from the reduced fat cocoa mass. Any known solvents may be used for this purpose, such as propane, butane, and hexane, among many others. Supercritical CO₂ may also be used to remove fat from a cocoa mass as described in US Patent No. 5,753,296, which discloses a method for preparing hypoallergenic cocoa powder. However, for the process described herein, fat is removed from the cocoa mass by solvent extraction and not with supercritical CO₂. There are many known processes in the art to effect this extraction, such as those described in U.S. Patent No. 6,111,119.

International published application no. two 98/34496 also describes a method for extracting fat from a high-fat cocoa mass with solvents.

Alternatively, although less preferable, the cocoa mass may be cocoa liquor, in which case the step of removing fat from the cocoa mass may include first applying pressure in a press to remove a first portion of said fat and extracting a second portion of the fat by contacting the cocoa mass with a liquefied solvent as discussed above, in which case the method also includes separating the solvent from the reduced fat cocoa mass. Alternatively, the step of removing fat may include extracting fat from the cocoa liquor solely by contacting the cocoa liquor with a liquefied solvent, thus avoiding the need for a hydraulic or screw press.

As mentioned above, the present invention contemplates first removing fat from a cocoa mass then alkalizing the reduced fat cocoa to form dutched cocoa. The extent to which the fat is removed need not be substantially all of the fat present in the cocoa mass, but only that amount such that subsequent dutching of the reduced fat cocoa mass does not result in the formation of an appreciable or noticeable amount of soap. The upper limit of the fat content of the reduced fat cocoa mass will depend on the end use of the processed cocoa and the extent to which dutching is needed. For example, when the use of the cocoa requires a very dark cocoa, thus requiring extreme dutching conditions, soap formation will occur more readily and to a greater extent. In this case, a relatively lower initial fat content in the reduced fat cocoa mass would be needed. A fat content of about 4% by weight should be sufficient to achieve processed cocoa which has a reduced amount of soap, and thus improved flavor, color, and/or flow characteristic than processed cocoa which undergoes dutching at a higher fat content. The step of removing fat is continued until a reduced fat cocoa mass having a fat content of less than 4 % by weight is achieved and, still more preferably, less than 1 % fat by weight is achieved.

The step of dutching or alkalizing the reduced fat cocoa mass may be carried out in any manner known in the art. As mentioned above, alkalizing the reduced fat cocoa mass typically involves contacting the reduced fat cocoa mass with an aqueous solution of an alkalizing agent selected from the group consisting or potassium hydroxide, potassium carbonate, sodium hydroxide, sodium carbonate, sodium bicarbonate, ammonium bicarbonate, ammonium hydroxide, or mixtures thereof. The specific alkalizing conditions are not critical to achieve the purposes of the present invention but are dictated more so by the desired end use for the cocoa being processed.

Dutching with reduced fat cocoa mass requires certain equipment considerations, especially when the fat content is less than 1%. More stringent dust control measures must be taken, specifically within the dutching reactor to contain fine cocoa particles from escaping with water vapor/steam during the drying cycle. Special high temperature filter bags or cartridges are commercially available for installation in a raised dome on top of the reactor. When producing very dark cocoas -- especially black, high viscosities are reached due to the large quantity of water used in the formula. The use of lower fat cocoas results in even higher viscosities. This requires even more ruggedly designed agitation or reduced batch size. Also in the production of black cocoa using lower fat cocoas, considerably harder particles are formed, thus requiring more intense grinding, or milling.

With this process, two products are developed: Cocoa butter and dutched cocoa powder. In one embodiment of the present invention, the dutched cocoa powder may be sold as low-fat dutched cocoa powder. According to an alternative embodiment, fat is added back to the defatted cocoa powder after the dutching process. The type of fat, if any, added to the defatted dutched cocoa could be cocoa butter or could be any other type of fat, or blends of fats if desired. Of course, if fats other than cocoa butter are added, this would change the labeling requirements for the product. This can be done in the same vessel or after transfer, in another vessel specifically for that purpose. The amount of cocoa butter added can vary from none up to any amount desired to produce a dutched cocoa powder with the requisite fat content. Typically, dutched cocoas are available with fat contents (i.e., cocoa butter) of less than 1 % up to 24 % .

In sum, the present invention recognizes that the treatment of typical cocoa material with alkalizing agents and water tends to develop unique color and flavor but also results in the saponification of a portion of the cocoa butter. The invention calls for first removing most of the cocoa butter from the cocoa, to less than 4 % and preferably to less than 1 %. After the reduction of fat, then the normal process for dutching is done. Dutching preferably occurs when the fat content of the cocoa mass is at its lowest point during processing thereof.

Removal of fat prior to dutching reduces the amount of fat (cocoa butter) subjected to the aqueous alkali solution under conditions which can saponify a portion of the cocoa butter. Reducing the amount of fat in the cocoa prior to dutching limits the amount of soap which can be generated during the alkalizing process. This is of special interest with regard to the highly alkalized cocoas (e.g., black cocoa). Whether the cocoa butter is added back after alkalizing of the lowfat cocoa or if the product is maintained as a lowfat product, the reduction of soap (especially with regard to highly alkalized cocoas) results in a product with superior flow characteristics, resulting in easier milling, and in a product with a flavor which is improved and considered to be of higher commercial value.

### EXAMPLE

The following example is included to more clearly demonstrate the overall nature of the invention. This invention is exemplary, not restrictive, of the invention.

A batch of cocoa presscake (cocoa powder having between 10/12% fat by weight) was obtained from a first commercial source and the fat was extracted using propane to less than 1% fat in a manner consistent with U.S. Patent No. 6,111,119. After desolventizing, an aqueous solution of ammonium bicarbonate was added in a first dose to the sample and an aqueous solution of sodium hydroxide was added in a second dose to the sample. The mixture was then cooked by being heated to above 110°C (230°F), pressure cooked for between 2 to 4 hours, then dried under atmospheric conditions for 4 hours and then finally vacuum dried for between 3 and 4 hours. The total cycle time for the defatting and alkalizing approached 16 hours.

The product was then milled in a pin mill with an air classifier to a fineness of 99.5 % through a 200 mesh screen. The product was then used in a formula to make a wafer sample. The same formula was used to make three additional comparative wafer samples but, in place of the defatted, dutch cocoa of the present invention, the following was used: (1) cocoa powder from a dutched (or alkalized) cocoa presscake from the first source; (2) cocoa powder from a dutched cocoa presscake from a second commercial source; and (3) cocoa powder from presscake from a dutched dehulled cocoa bean (i.e., nib). As each of comparative examples had a cocoa fat content of between 10/12% , the remainder of the fat content called for by the wafer was made up by the addition of vegetable fat for the wafer of the present invention.

Using a blind taste panel of laypersons, the wafer produced using the defatted dutched cocoa of the present invention was found to be comparable in taste to the wafer produced using the cocoa of comparative example (3). Both the wafer produced from the defatted dutched cocoa of the present invention and from the cocoa of comparative example (3) were found to be superior to the wafers produced from comparative examples (1) and (2). It should be noted that dutched cocoa produced from the nib is considered superior in taste to dutched cocoa produced from presscake in that about 90 % of the soap produced in the alkalization process is removed during the pressing following the alkalization of the dehulled cocoa bean.

## Claims

1. A method for making dutched cocoa comprising the steps of:
removing fat from a cocoa mass to form a reduced fat cocoa mass having less than 4% fat by weight, wherein said fat removal step comprises extracting the fat with a liquefied solvent; and
alkalizing said reduced fat cocoa mass to form dutched cocoa.

2. The method in accordance with claim 1, wherein said cocoa mass comprises cocoa powder or cocoa presscake and said method further comprises separating said solvent from said reduced fat cocoa mass.

3. The method in accordance with claim 1, wherein said solvent is propane or butane or a mixture thereof.

4. The method in accordance with claim 2, wherein said cocoa powder or cocoa presscake comprises between about 10 to 12% fat by weight

5. The method in accordance with claim 1, wherein said reduced fat cocoa mass comprises less than 1% fat by weight.

6. The method in accordance with claim 1, wherein said cocoa mass is cocoa liquor.

7. The method in accordance with claim 6, wherein said cocoa liquor comprises about 50-58% fat by weight.

8. The method in accordance with claim 6, wherein the step of removing said fat comprises applying pressure in a press to remove a first portion of said fat and extracting a second portion of said fat by contacting said cocoa mass with a liquefied solvent, wherein said method further comprises separating said solvent from said reduced fat cocoa mass.

9. The method in accordance with claim 1, wherein the step of alkalizing said reduced fat cocoa mass comprises contacting said reduced fat cocoa mass with an aqueous solution of an alkalizing agent selected from the group consisting or potassium hydroxide, potassium carbonate, sodium hydroxide, sodium carbonate, sodium bicarbonate, ammonium bicarbonate, ammonium hydroxide, or mixtures thereof.

10. The method in accordance with claim 1 further comprising adding fat to said dutched cocoa to form a reconstituted product.

11. The method in accordance with claim 11, wherein said fat is cocoa fat.

12. The product formed by any process according to claims 1-11.

## Patentansprüche

1. Verfahren zur Herstellung von alkalisiertem Kakao mit folgenden Schritten:
Entfernen von Fett aus einer Kakaomasse zum Bilden einer fettreduzierten Kakaomasse mit weniger als 4 % Massenanteil Fett, wobei der Schritt des Entfernens des Fetts Extrahieren des Fetts mit einer verflüssigten Lösung;
und
Alkalisieren der fettreduzierten Kakaomasse zum Bilden von alkalisiertem Kakao umfasst.

2. Verfahren gemäß Anspruch 1, wobei die Kakaomasse Kakaopulver oder Kakaopresskuchen umfasst und das Verfahren ferner das Trennen der Lösung von der fettreduzierten Kakaomasse umfasst.

3. Verfahren gemäß Anspruch 1, wobei die Lösung Propan oder Butan oder eine Mischung daraus ist.

4. Verfahren gemäß Anspruch 2, wobei das Kakaopulver oder der Kakaopresskuchen etwa 10 bis 12 % Massenanteil Fett umfasst.

5. Verfahren gemäß Anspruch 1, wobei die fettreduzierte Kakaomasse weniger als 1 % Massenanteil Fett umfasst.

6. Verfahren gemäß Anspruch 1, wobei die Kakaomasse Kakaopaste ist.

7. Verfahren gemäß Anspruch 6, wobei die Kakaopaste etwa 50 bis 58 % Massenanteil Fett umfasst.

8. Verfahren gemäß Anspruch 6, wobei der Schritt des Entfernen des Fetts Aufbringen von Druck in einer Presse zum Entfernen eines ersten Teils des Fetts und Extrahieren eines zweiten Teils des Fetts durch Kontaktieren der Kakaomasse mit einer verflüssigten Lösung umfasst, wobei das Verfahren ferner das Trennen der Lösung von der fettreduzierten Kakaomasse umfasst.

9. Verfahren gemäß Anspruch 1, wobei der Schritt des Alkalisierens der fettreduzierten Kakaomasse Kontaktieren der fettreduzierten Kakaomasse mit einer wässrigen Lösung eines Alkalisierungsmittels aus der Gruppe bestehend aus Kaliumhydroxid, Kaliumcarbonat, Natriumhydroxid, Natriumcarbonat, Natriumbicarbonat, Ammoniumbicarbonat, Ammoniumhydroxid oder einer Mischung daraus umfasst.

10. Verfahren gemäß Anspruch 1, ferner umfassend ein Hinzufügen von Fett zu dem alkalisierten Kakao zum Bilden eines rekonstituierten Produkts.

11. Verfahren gemäß Anspruch 1, wobei das Fett Kakaofett ist.

12. Produkt hergestellt durch ein Verfahren gemäß einem der Ansprüche 1 bis 11.

## Revendications

1. Procédé pour produire du cacao soluble comprenant les étapes consistant à :
retirer des matières grasses d'une masse de cacao pour former une masse de cacao à teneur réduite en matières grasses ayant moins de 4 % en poids de matières grasses, laquelle étape d'élimination des matières grasses comprenant l'extraction des matières grasses avec un solvant liquéfié ; et
alcaliniser ladite masse de cacao à teneur réduite en matières grasses pour former du cacao soluble.

2. Procédé selon la revendication 1, dans lequel ladite masse de cacao comprend de la poudre de cacao ou du tourteau de cacao de torsion et ledit procédé comprend en outre la séparation dudit solvant d'avec ladite masse de cacao à teneur réduite en matières grasses.

3. Procédé selon la revendication 1, dans lequel ledit solvant est le propane ou le butane ou un mélange de ceux-ci.

4. Procédé selon la revendication 2, dans lequel ladite poudre de cacao ou ledit tourteau de cacao de torsion comprend entre environ 10 et 12 % en poids de matières grasses.

5. Procédé selon la revendication 1, dans lequel ladite masse de cacao à teneur réduite en matières grasses comprend moins de 1 % en poids de matières grasses.

6. Procédé selon la revendication 1, dans lequel ladite masse de cacao est de la liqueur de cacao.

7. Procédé selon la revendication 6, dans lequel ladite liqueur de cacao comprend environ 50 à 58 % en poids de matières grasses.

8. Procédé selon la revendication 6, dans lequel l'étape d'élimination desdites matières grasses comprend l'application de pression dans une presse pour éliminer une première partie desdites matières grasses et l'extraction d'une deuxième partie desdites matières grasses par mise en contact de ladite masse de cacao avec un solvant liquéfié, ledit procédé comprenant en outre la séparation dudit solvant d'avec ladite masse de cacao à teneur réduite en matières grasses.

9. Procédé selon la revendication 1, dans lequel l'étape d'alcalinisation de ladite masse de cacao à teneur réduite en matières grasses comprend la mise en contact de ladite masse de cacao à teneur réduite en matières grasses avec une solution aqueuse d'un agent d'alcalinisation choisi dans le groupe constitué par l'hydroxyde de potassium, le carbonate de potassium, l'hydroxyde de sodium, le carbonate de sodium, le bicarbonate de sodium, le bicarbonate d'ammonium, l'hydroxyde d'ammonium, ou leurs mélanges.

10. Procédé selon la revendication 1, comprenant en outre l'addition de matières grasses audit cacao soluble pour former un produit reconstitué.

11. Procédé selon la revendication 11, dans lequel lesdites matières grasses sont de la graisse de cacao.

12. Produit formé par un procédé quelconque selon les revendications 1 à 11.
